(19) **Europäisches Patentamt / European Patent Office / Office européen des brevets**

(11) **EP 1 931 084 B1**

(12) **EUROPEAN PATENT SPECIFICATION**

(45) Date of publication and mention
of the grant of the patent:
**14.08.2013 Bulletin 2013/33**

(51) Int Cl.:
**H04L 12/26** *(2006.01)*

(21) Application number: **06742049.7**

(22) Date of filing: **31.05.2006**

(86) International application number:
**PCT/CN2006/001162**

(87) International publication number:
**WO 2007/025427 (08.03.2007 Gazette 2007/10)**

(54) **A METHOD FOR GETTING THE LINK ESTIMATING PARAMETERS**

VERFAHREN ZUM ERHALTEN DER STRECKENSCHÄTZUNGSPARAMETER

METHODE POUR OBTENIR LES PARAMETRES D'ESTIMATION DE LIAISON

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.08.2005 CN 200510093917**

(43) Date of publication of application:
**11.06.2008 Bulletin 2008/24**

(73) Proprietor: **Huawei Technologies Co., Ltd.**
**Longgang District, Shenzhen**
**Guangdong 518129 (CN)**

(72) Inventors:
- **YANG, Pingan**
  **518129 Shenzhen Guangdong (CN)**
- **ZI, Kang**
  **518129 Shenzhen Guangdong (CN)**
- **LIU, Jun**
  **518129 Shenzhen Guangdong (CN)**

(74) Representative: **Epping - Hermann - Fischer**
**Patentanwaltsgesellschaft mbH**
**Ridlerstrasse 55**
**80339 München (DE)**

(56) References cited:
EP-A- 0 666 667    EP-A- 0 986 190
EP-A- 1 443 743    EP-A- 1 482 674
EP-A- 1 487 152    WO-A-01/26289
WO-A-03/012601    CN-A- 1 497 901
US-A- 5 477 531    US-A- 6 012 096
US-A1- 2002 120 758    US-A1- 2004 001 511
US-B2- 6 810 235

- SCHULZRINNE H ET AL: "RFC 3550 RTP: A Transport Protocol for Real-Time Applications" NETWORK WORKING GROUP REQUEST FOR COMMENTS, XX, XX, 1 July 2003 (2003-07-01), pages 1-104, XP002276760
- CAO H.: 'STUDY AND IMPLEMENTATION OF NETWORK PERFORMANCE MEASUREMENT BASED ON ACTIVE PROBING' A DISSERTATION SUBMITTED FOR THE MASTER'S DEGREE COMPUTER COLLEGE, NATIONAL UNIVERSITY OF DEFENSE TECHNOLOGY, CHANGSHA, HUNAN, P.R. CHINA November 2003,

EP 1 931 084 B1

## Description

### Field of the Invention

The present invention relates to a link detecting technique, and especially to a method for obtaining the link estimating parameters.

### Background of the Invention

Link forwarding latency and jitter are important parameters for estimating link performance.

Real time services such as audio services are more sensitive to link estimating parameters such as link forwarding latency and jitter, and it is usually necessary to obtain the link forwarding latency and jitter of a link to achieve a better audio service.

A method for obtaining the link forwarding latency and jitter is described as follows.

Respective background services are configured at both ends of a link, for example, on system A and system B. System A constantly sends messages including sending-timestamp information to system B through the background service. System B determines the forwarding latency and jitter on a unidirectional link from system A to system B in accordance with the receiving time of a message and the sending-timestamp carried in the message. System B may also constantly send messages including sending-timestamp information to system A through the background service. System A determines the forwarding latency and jitter of a unidirectional link from system A to system B based on the receiving time of a message and the sending-timestamp carried in the message.

In this method, it is necessary to initiate a background service to collect the link forwarding latency and jitter, thus the background service consumes system resources. Further, the function of a message sent by the background service is only to acquire the link forwarding latency and jitter, and the transmission of the message consumes link transmission resources between the systems, thereby increasing the system load.

EP-A-0 666 667 provides a method and a system for computer network monitoring, implemented in a network in which processes communicate using message queuing. Each node of the network has a network management program installed thereon which includes two independent components: a Point Of Control (POC) program for initiating network tests by injecting a test message into the network and for receiving responses from all the nodes of the network; and a Network Test Program (NTP) for sending a reply message to the single POC for a particular test when the NTP receives test messages within that test, and for propagating the test by forwarding a message to all of the current node's adjacent nodes. Test results are analysed at the POC for display to the network administrator. Injected test messages propagate throughout the network in a self-exploring manner, exploiting the parallelism of the network. The individual nodes are not required to know the network topology other than to know their nearest neighbour nodes.

US 6 012 096 discloses another network monitoring method.

### Summary of the Invention

In view of the above, an object of the disclosure is to provide methods for obtaining link estimating parameters, to increase the system resources utilization and to reduce the system load.

A technical solution of the disclosure is specifically implemented by the method in accordance with independent claim 1.

It can be seen from the claimed technical solution that the disclosure sufficiently utilizes the bidirectional forwarding detection (BFD) messages to obtain the link estimating parameters such as link forwarding latency and jitter of the link for transferring the BFD messages while performing the forwarding path defect detection through the BFD, thus avoiding processes of separately providing background services to collect the link estimating parameters such as link forwarding latency and jitter.

When an echo (ECHO) function is supported by the BFD in the systems at both ends, the disclosure may utilize the ECHO message in the BFD message to obtain the link forwarding latency and jitter for a round-trip link between the systems at both ends. The disclosure may also utilize the BFD control message in the BFD message to obtain the link forwarding latency and jitter of a unidirectional link between the systems at both ends. The technical solution provided by the disclosure may increase the system resources utilization and reduce the system load, while the link estimating parameters may be obtained quickly and accurately.

### Brief Description of the Drawings

Figure 1 is a flow chart of embodiment 1 of the disclosure for obtaining the link estimating parameters; and

Figure 2 is a flow chart of embodiment 2 of the disclosure for obtaining the link estimating parameters.

**Detailed Description of the Embodiments**

The BFD is a kind of detection mechanism for fast detecting whether the forwarding path between a pair of forwarding engines is available. The BFD provide a kind of fault detection mechanism with low cost and short detection cycle. The BFD detects faults of interfaces, data links and forward engines. The BFD achieves forwarding path detection through the BFD message transmission. The disclosure utilizes BFD messages such as ECHO messages or BFD control messages to obtain link estimating parameters such as link forwarding latency and jitter of a link for transferring the BFD messages, making it possible to obtain the link forwarding latency and jitter in the procedure of forwarding path defect detection, thereby avoiding the process of separately providing a background service to collect the link estimating parameters such as link forwarding latency and jitter. This facilitates to increase utilization of the system resources and reduce the system load.

According to the disclosure, the link estimating parameters of the link is determined according to the transmission time of the BFD messages in the link.

The disclosure will now be further described in detail below with reference to the accompanying drawings and the preferred embodiments.

While performing the forwarding path defect detection on the BFD message, the disclosure utilizes the BFD message to obtain the link estimating parameters of a link quickly and accurately by obtaining the transmission time of the BFD message in the link, i.e., the sending time of the BFD message and the receiving time of the BFD message. The link estimating parameter may be link forwarding latency, may be jitter, or may be the link forwarding latency and jitter.

There are various methods of obtaining the sending time of a BFD message, such as a method where the transmitting end records and stores the sending time of the BFD message, and a method where a sending-timestamp is added in the BFD message.

The method for obtaining the link estimating parameters of the disclosure will be described in detail below by taking two specific implementations as examples.

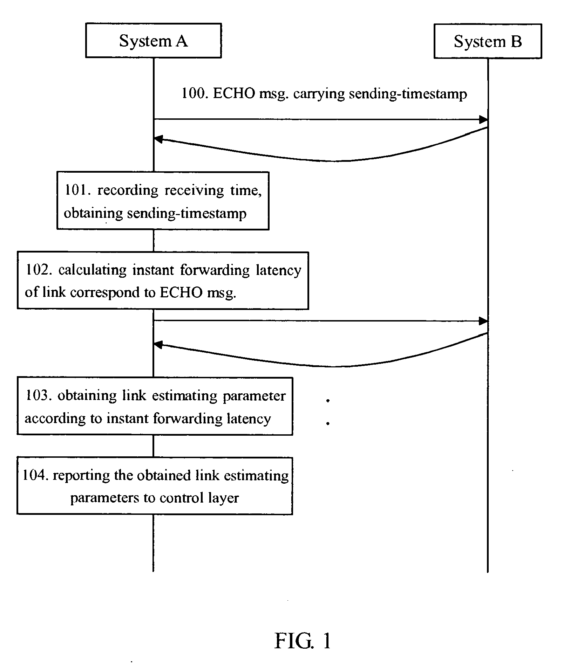

The first method is a method for using an ECHO message to obtain the link estimating parameters for a round trip from system A to system B and to system A in case that the BFD supports the ECHO function. Figure 1 is a flow chart of the embodiment 1 of the disclosure for obtaining the link estimating parameter. As shown in figure 1, assume that the transmitting end is system A, and the receiving end is system B. The method includes the following steps:

Step 100: Through system A, the sending-timestamp of an ECHO message is carried in the ECHO message and the ECHO message is transmitted to system B.

Because the format of ECHO message can be recognized only by the transmitting end, the sending-timestamp carried by the ECHO message is invisible for the peer end system, that is system B, of the BFD protocol and the BFD session, it is sufficient that the field contents in the ECHO message may be understood only by the transmitting end.

It is possible to add new fields in the ECHO message to carry the sending-timestamp. The added fields in the ECHO message may be represented as the following:

```
Payload Type
Payload Length
Payload Value: {
TimeNow(high 32 bits)
TimeNow(low 32bits)
}
```

A first predetermined value is carried in the Payload Type field. The first predetermined value is unique in the transmitting end, and represents that a sending-timestamp is carried in the Payload Value field following the Payload Type field. The Payload Length field represents the length occupied by the Payload Value field, the Payload Length field and the Payload Value field. The TimeNow(high 32 bits) field represents the high 32 bits of the sending-timestamp, and the TimeNow (low 32bits) field represents the low 32 bits of the sending-timestamp.

Of course, the ECHO message may also carry the sending-timestamp through other manners, as long as the manners can be understood by the transmitting end system itself. For example, it is possible to use existing fields in the ECHO message to carry the sending-timestamp.

Step 101: The ECHO message is returned to the transmitting end by system B. System A records the receiving time when it receives the ECHO message, and obtains the sending-timestamp of the ECHO message from Payload Value fields following the Payload Type field having the first predetermined value.

Step 102: System A calculates the time difference of the receiving time and the sending-timestamp of the ECHO message. This time difference is the instant forwarding latency of the link corresponding to the ECHO message.

System A repeats the above steps 100-102, and continuously transmits ECHO messages to obtain the instant forwarding latencies of the link corresponding to the ECHO messages.

When system A needs to obtain the forwarding latency and jitter of the link, for example, when system A obtains the link estimating parameters such as forwarding latency and jitter over a preset time interval, the method goes to step 103.

Step 103: System A obtains the link estimating parameters according to the instant forwarding latencies over the preset time interval.

System A may calculate an average value of the instant forwarding latencies over the preset time interval to obtain the average forwarding latency of the link. The average forwarding latency is the link forwarding latency of the link and is one of the link estimating parameters. A procedure for system A to obtain the jitter of the link according to the instant forwarding latencies includes: calculating absolute values of differences between instant forwarding latencies corresponding to adjacent ECHO messages as instant jitters of the link, and calculating an average value over the instant jitters as the average jitter of the link after instant jitters of the link over the preset time interval are obtained, the average jitter being one of the link estimating parameters.

Further, in this step, it is also possible to select the maximum instant forwarding latency from the instant forwarding latencies over the preset time interval and select the maximum instant jitter from the instant jitters as parts of the link estimating parameters.

Step 104: System A reports the link estimating parameters obtained for a round trip from system A to system B to system A to the control layer of system A.

The link estimating parameters may include link forwarding latency and link forwarding jitter, and may further include maximum instant forwarding latency and maximum instant jitter.

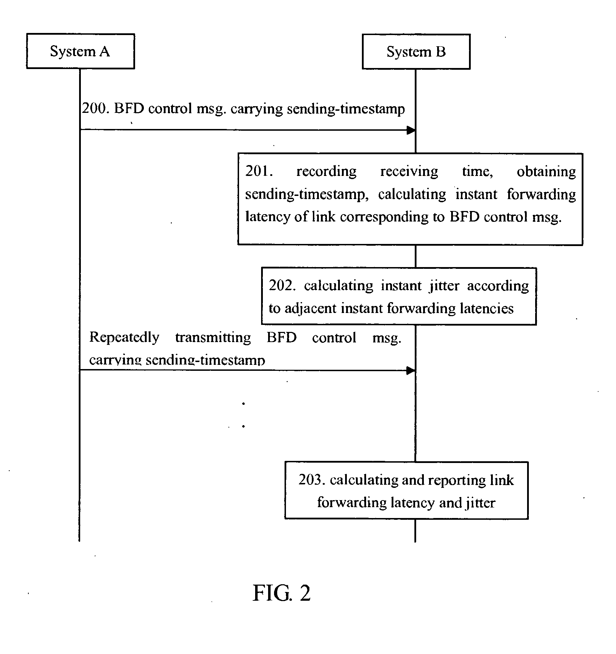

The second method is a method where in case that the BFD does not support the ECHO function, the BFD control message is used to obtain the link estimating parameters for a link from transmitting end such as system A to the receiving end such as system B. Figure 2 is a flow chart of embodiment 2 of the disclosure for obtaining the link estimating parameters. As shown in figure 2, assume that the transmitting end is system A and the receiving end is system B. The method includes the following steps:

Step 200: Through system A, the sending-timestamp is carried in a BFD control message and the BFD control message is transmitted to system B.

The BFD control message is transmitted by one end and received by another end, i.e., the BFD control message transmitted from system A is never returned to system A from system B, but received by system B. Therefore, the sending-timestamp carried in the BFD control message is visible to the receiving end network device supporting the BFD protocol and the BFD session. The format of the BFD control message needs to be understood by both transmitting end and receiving end.

It is possible to carry the sending-timestamp by adding new fields in the BFD control message. The message format of the extended BFD control message is as shown in table 1.

Table 1

| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 | 0 | 1 |
|---|---|---|---|---|---|---|---|---|---|---|---|---|---|---|---|---|---|---|---|---|---|---|---|---|---|---|---|---|---|---|---|
| Vers | | | Diag | | | | | Sta | | P | F | C | A | D | R | Detect Mult | | | | | | | | Length | | | | | | | |
| Discriminator generated by the transmitting system (My Discriminator) | | | | | | | | | | | | | | | | | | | | | | | | | | | | | | | |
| Discriminator received from the corresponding remote system (Your Discriminator) | | | | | | | | | | | | | | | | | | | | | | | | | | | | | | | |
| Minimum transmitting interval for BFD control messages as desired by the local system (Desired Min TX Interval) | | | | | | | | | | | | | | | | | | | | | | | | | | | | | | | |
| Minimum BFD receiving interval supported by the system (Required Min RX Interval) | | | | | | | | | | | | | | | | | | | | | | | | | | | | | | | |
| Minimum interval between received BFD echo messages as supported by the system (Required Min Echo RX Interval) | | | | | | | | | | | | | | | | | | | | | | | | | | | | | | | |
| The following fields are optional | | | | | | | | | | | | | | | | | | | | | | | | | | | | | | | |
| Authentication Type (Auth Type) | | | | | | | | | | Authentication Length (Auth Len) | | | | | | | | | | | Authentication Information (Authentication Data) | | | | | | | | | | |
| Option Type | | | | | | | | | | Option Length | | | | | | | | | | | Option Value | | | | | | | | | | |

In table 1, the Option Type field, the Option Length field and the Option Value field are the fields added in the BFD control message according to the disclosure. The Option Type field is used for identifying the sending-timestamp carried in the following Option Value field, i.e., when the Option Type field takes a value of a second predetermined value such as $0 \times 01$, it represents that the Option Value field following the Option Type field carries the sending-timestamp. The Option Length field is used for identifying the length of the Option Type field, the Option Length field and the Option Value field.

Because the Option Type field, the Option Length field and the Option Value field are optional items, the disclosure utilizes an existing reserved flag R in the BFD control message to identify whether the BFD control message includes the sending-timestamp. When the reserved flag R takes a third predetermined value, for example, the reserved flag R is 1, this represents that the BFD control message includes the sending-timestamp; otherwise, this represents that the BFD control message does not include the sending-timestamp.

System A makes the Option Value field to carry the sending time of the BFD control message according to the message format of the extended BFD control message, and correspondingly sets the Option Type field at the second predetermined value and the reserved flag R at the third predetermined value. Also, system A sets the content of the Option Length field according to the number of bytes occupied by the Option Type field, the Option Length field and the Option Value field. After completing the above settings, system A sends the BFD control message to the link from system A to system B, and transmits it to system B. BFD control message may carry the sending-timestamp through other manners. For example, it is possible to use existing fields in the BFD control message to carry the sending-timestamp.

Step 201: System B receives the BFD control message, records the receiving time of the BFD control message, and obtains the sending-timestamp from the Option Value field whose Option Type field takes the second predetermined value when the reserved flag R takes the third predetermined value. System B obtains the instant forwarding latency of the link from system A to system B corresponding to the BFD control message according to the receiving time and the sending-timestamp.

Assuming that the time when system B receives the BFD control message is T2, the sending-timestamp is T1, and the system time difference of system A and system B is $\Delta t$, the link instant forwarding latency Tdelay corresponding to the BFD control message is as shown in formula (1):

$$\text{Tdelay} = |T2 - T1| - \Delta t \qquad (1)$$

The instant forwarding latency Tdelay is the instant forwarding latency of a unidirectional link from system A to system B, and is one of the link estimating parameters.

The method for obtaining the system time difference $\Delta t$ of the system A and system B does not belongs to the scope of the disclosure, and is not described in detail herein. For example, it is possible to use a method for synchronizing the system clocks through a network time protocol (NTP) to make the value of the system time difference $\Delta t$ of system A and system B to be 0.

Step 202: System B calculates the instant jitter according to the adjacent instant forwarding latencies.

System B calculates the absolute value of the difference of the present instant forwarding latency and the previous instant forwarding latency. The absolute value is the instant jitter of the link from system A to system B, and is one of the link estimating parameters. It is apparent that the instant jitter is irrelevant with the system time difference $\Delta t$ of system A and system B.

The above step 200 - step 202 are repeated, i.e., system A continuously transmits BFD control messages so that system B obtains a plurality of instant forwarding latencies and instant jitters of the link from system A to system B.

When system A needs to report the link estimating parameters for the link from system A to system B, for example, when system A takes the link forwarding latencies and jitters over a preset time interval as a basis, the method goes to step 203.

Step 203: System B calculates an average value of the instant forwarding latencies and an average value of the instant jitters, reports these two average values, which are referred to as the link forwarding latency and jitter of the link respectively, to the control layer of the system B.

System B may also report the maximum instant forwarding latency of the instant forwarding latencies and the maximum instant jitter of the instant jitters as the link estimating parameter to the control layer of system B.

**Claims**

1. A method for obtaining link estimating parameters, **characterized by** comprising:

providing a payload type field, a payload value field and a payload length field for indicating the length of the payload type field, the payload length field and the payload value field in an echo message;
setting, by a transmitting end, the value of the payload type field in the echo message to be sent at a first predetermined value indicating that a sending-timestamp is carried in the payload value field;
carrying the sending-timestamp of the echo message in the payload value field;
transmitting (100), by the transmitting end, the echo message to a receiving end;
receiving, by the transmitting end, the echo message returned from the receiving end;
recording (101), by the transmitting end, the receiving time when the transmitting end receives the echo message returned from the receiving end;
obtaining the sending-timestamp of the echo message from the payload value field following the payload type field having the first predetermined value;
calculating (102), by the transmitting end, a time difference between the receiving time and the sending-timestamp of the echo message to obtain instant forwarding latency of the link corresponding to the echo message;
repeating, by the transmitting end, the above steps, and continuously transmitting echo messages to obtain the instant forwarding latencies of the link corresponding to the echo messages; and
calculating (103), by the transmitting end, an average value of instant forwarding latencies over a preset time interval as the link forwarding latency of the link, the link forwarding latency being one of link estimating parameters.

2. The method according to claim 1, **characterized in** further comprising:

calculating (103), by the transmitting end, absolute values of differences between instant forwarding latencies corresponding to adjacent echo messages to obtain instant jitters of the link, and calculating an average value over the instant jitters as the jitter of link for transmitting the echo messages, the jitter being one of the link estimating parameters.

3. The method according to claims 1 or 2, **characterized in that**, the method further comprises: reporting (104), by the transmitting end, the obtained link estimating parameters to a control layer of the transmitting end.

4. The method according to claim 1, **characterized in that**, the method further comprises: selecting, by the transmitting end, a maximum value of the instant forwarding latencies as one of the link estimating parameters.

5. The method according to claim 2, **characterized in that**, the method further comprises: selecting, by the transmitting end, a maximum value of the instant jitters as one of the link estimating parameters.

**Patentansprüche**

1. Verfahren zum Erhalten von Verbindungsschätzparametern, **dadurch gekennzeichnet, dass** es Folgendes umfasst:

Bereitstellen eines Nutzlasttypfeldes, eines Nutzlastwertfeldes und eines Nutzlastlängenfeldes, um die Länge des Nutzlasttypfeldes, des Nutzlastlängenfeldes und des Nutzlastwertfeldes in einer Echonachricht anzugeben;
Setzen durch eine Sendeseite des Wertes des Nutzlasttypfeldes in der zu sendenden Echonachricht auf einen ersten vorgegebenen Wert, der angibt, dass ein Sendezeitstempel in dem Nutzlastwertfeld geführt wird;
Führen des Sendezeitstempels der Echonachricht in dem Nutzlastwertfeld;
Senden (100) durch die Sendeseite der Echonachricht an eine Empfangsseite;
Empfangen durch die Sendeseite der von der Empfangsseite zurückgeschickten Echonachricht;
Aufzeichnen (101) durch die Sendeseite des Empfangszeitpunkts, wenn die Sendeseite die von der Empfangsseite zurückgeschickte Echonachricht empfängt;
Erhalten des Sendezeitstempels der Echonachricht von dem Nutzlastwertfeld, das dem Nutzlasttypfeld folgt, das den ersten vorgegebenen Wert besitzt;
Berechnen (102) durch die Sendeseite eines Zeitunterschieds zwischen dem Empfangszeitpunkt und dem Sendezeitstempel der Echonachricht, um die augenblickliche Weiterleitungs-Latenzzeit der Verbindung, die der Echonachricht entspricht, zu erhalten;

Wiederholen durch die Sendeseite der obigen Schritte und kontinuierliches Senden von Echonachrichten, um die augenblicklichen Weiterleitungs-Latenzzeiten der Verbindung, die den Echonachrichten entsprechen, zu erhalten; und

Berechnen (103) durch die Sendeseite eines Durchschnittswerts der augenblicklichen Weiterleitungs-Latenzzeiten über ein vorgegebenes Zeitintervall als die Verbindungs-Weiterleitungs-Latenzzeit der Verbindung, wobei die Verbindungs-Weiterleitungs-Latenzzeit einer der Verbindungsschätzparameter ist.

2. Verfahren nach Anspruch 1, **dadurch gekennzeichnet, dass** es ferner Folgendes umfasst:

Berechnen (103) durch die Sendeseite der Absolutwerte der Unterschiede zwischen den augenblicklichen Weiterleitungs-Latenzzeiten, die benachbarten Echonachrichten entsprechen, um die augenblicklichen Jitter der Verbindung zu erhalten, und Berechnen eines Durchschnittswerts über die augenblicklichen Jitter als den Jitter der Verbindung zum Senden der Echonachrichten, wobei der Jitter einer der Verbindungsschätzparameter ist.

3. Verfahren nach Anspruch 1 oder 2, **dadurch gekennzeichnet, dass** das Verfahren ferner Folgendes umfasst: Melden (104) durch die Sendeseite der erhaltenen Verbindungsschätzparameter an eine Steuerschicht der Sendeseite.

4. Verfahren nach Anspruch 1, **dadurch gekennzeichnet, dass** das Verfahren ferner Folgendes umfasst: Auswählen durch die Sendeseite eines Maximalwerts der augenblicklichen Weiterleitungs-Latenzzeiten als einen der Verbindungsschätzparameter.

5. Verfahren nach Anspruch 2, **dadurch gekennzeichnet, dass** das Verfahren ferner Folgendes umfasst: Auswählen durch die Sendeseite eines Maximalwerts der augenblicklichen Jitter als einen der Verbindungsschätzparameter.

**Revendications**

1. Procédé pour obtenir des paramètres d'estimation de liaison, **caractérisé par** les étapes suivantes :

pourvoir un champ de type de données utiles, un champ de valeur de données utiles et un champ de longueur de données utiles pour indiquer la longueur du champ de type de données utiles, du champ de longueur de données utiles et du champ de valeur de données utiles dans un message d'écho ;

définir, par une extrémité de transmission, la valeur du champ de type de données utiles dans le message d'écho à envoyer à une première valeur prédéterminée indiquant qu'une estampille d'envoi est acheminée dans le champ de valeur de données utiles ;

acheminer l'estampille d'envoi du message d'écho dans le champ de valeur de données utiles ;

transmettre (100), par l'extrémité de transmission, le message d'écho à une extrémité de réception ;

recevoir, par l'extrémité de transmission, le message d'écho retourné par l'extrémité de réception ;

enregistrer (101), par l'extrémité de transmission, le temps de réception lorsque l'extrémité de transmission reçoit le message d'écho retourné par l'extrémité de réception ;

obtenir l'estampille d'envoi du message d'écho à partir du champ de valeur de données utiles suivant le champ de type de données utiles ayant la première valeur prédéterminée ;

calculer (102), par l'extrémité de transmission, une différence de temps entre le temps de réception et l'estampille d'envoi du message d'écho pour obtenir le temps de latence de retransmission instantané de la liaison correspondant au message d'écho ;

répéter, par l'extrémité de transmission, les étapes ci-dessus, et transmettre en continu des messages d'écho pour obtenir les temps de latence de retransmission instantanés de la liaison correspondant aux messages d'écho ; et

calculer (103), par l'extrémité de transmission, une valeur moyenne de temps de latence de retransmission instantanés sur un intervalle de temps prédéfini comme étant le temps de latence de retransmission de liaison de la liaison, le temps de latence de retransmission de liaison étant un des paramètres d'estimation de liaison.

2. Procédé selon la revendication 1, **caractérisé en ce qu'**il comprend en outre les étapes suivantes :

calculer (103), par l'extrémité de transmission, des valeurs absolues de différences entre des temps de latence de retransmission instantanés correspondant à des messages d'écho adjacents pour obtenir des scintillements instantanés de la liaison, et

calculer une valeur moyenne sur les scintillements instantanés comme étant le scintillement de liaison pour transmettre les messages d'écho, le scintillement étant un des paramètres d'estimation de liaison.

3. Procédé selon la revendication 1 ou la revendication 2, **caractérisé en ce que** le procédé comprend en outre l'étape suivante : rapporter (104), par l'extrémité de transmission, les paramètres d'estimation de liaison obtenus à une couche de contrôle de l'extrémité de transmission.

4. Procédé selon la revendication 1, **caractérisé en ce que** le procédé comprend en outre l'étape suivante : sélectionner, par l'extrémité de transmission, une valeur maximale des temps de latence de retransmission instantanés comme un des paramètres d'estimation de liaison.

5. Procédé selon la revendication 2, **caractérisé en ce que** le procédé comprend en outre l'étape suivante : sélectionner, par l'extrémité de transmission, une valeur maximale des scintillements instantanés comme un des paramètres d'estimation de liaison.

FIG. 1

```
┌─────────────┐                                    ┌─────────────┐
│  System A   │                                    │  System B   │
└─────────────┘                                    └─────────────┘
       │                                                  │
       │ 200. BFD control msg. carrying sending-timestamp │
       │─────────────────────────────────────────────────▶│
       │                                                  │
       │        ┌─────────────────────────────────────────┴──────┐
       │        │ 201.  recording   receiving   time,  obtaining  │
       │        │ sending-timestamp, calculating instant forwarding│
       │        │ latency of link corresponding to BFD control msg.│
       │        └─────────────────────────────────────────┬──────┘
       │                                                  │
       │            ┌─────────────────────────────────────┴──────┐
       │            │ 202. calculating instant jitter according   │
       │            │ to adjacent instant forwarding latencies    │
       │            └─────────────────────────────────────┬──────┘
       │ Repeatedly  transmitting  BFD  control  msg.      │
       │ carrying sending-timestamp                        │
       │─────────────────────────────────────────────────▶│
       │                                                  │
       │                         .                        │
       │                      .  .                        │
       │                                                  │
       │              ┌───────────────────────────────────┴──────┐
       │              │ 203. calculating and reporting link       │
       │              │     forwarding latency and jitter         │
       │              └───────────────────────────────────┬──────┘
       │                                                  │
```

## FIG. 2

**EP 1 931 084 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0666667 A
- US 6012096 A